(19) Europäisches Patentamt

European Patent Office

Office européen des brevets

(11) **EP 1 684 463 A1**

(12) **EUROPEAN PATENT APPLICATION**

(43) Date of publication:
26.07.2006 Bulletin 2006/30

(51) Int Cl.:
*H04L 12/26* (2006.01)

(21) Application number: 06100445.3

(22) Date of filing: 17.01.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 20.01.2005 GB 0501174

(71) Applicant: Agilent Technologies
Palo Alto, CA 94303-0870 (US)

(72) Inventors:
• Curran-Gray,Martin
South Queensferry
Lothian EH30 9TG (GB)
• Lehane, Andrew Robert
South Queensferry
LothianEH30 9TG (GB)

(74) Representative: Coker, David Graeme
Agilent Technologies UK Ltd,
Legal Department, M/S CSC1GM2,
Eskdale Road,
Winnersh Triangle
Wokingham, Berks RG41 5DZ (GB)

(54) **Monitoring system, method of sampling datagrams, and apparatus therefor**

(57)     A monitoring system comprises a first network probe (106) coupled to a first point in a communications link and a second network probe (116) coupled to a second point in the communications link. Each of the first and second network probes (106,116) comprises an array of comparators (300) arranged to sample packets from a predetermined flow of packets and store timestamps associated with packets samples in a predictable position within a data structure. Data structures generated by each of the first and second network probes (106,116) are sent to a comparator, where timestamps and counterpart timestamps are identified due to the predictable storage of the timestamps within the data structures.

Figure 3

**EP 1 684 463 A1**

**Description**

The present invention relates to a method of sampling datagrams of the type, for example, that samples a datagram at a first time and at a first point in a communications link and the datagram at a second time and at a second point in the communications link. The present invention also relates to an apparatus for sampling a datagram, for example a network probe. The present invention further relates to a monitoring system of the type, for example, that samples a datagram at a first time and at a first point in a communications link and the datagram at a second time and at a second point in the communications link.

In the field of monitoring performance of a communications network, it is known to provide a passive monitoring system to monitor predetermined flows of datagrams communicated over a communications link spanning one or more communications networks. In such monitoring systems, a first probe is located at a first point along the monitored link and a second probe is located at a second point along the monitored link. The probes are coupled respectively to the first and second points along the link by respective taps that "siphon off" a copy of the electrical or optical signals passing the first and second points. The data tapped by the first and second probes are correlated to derive diagnostic data that can be used for managing and troubleshooting the communications network.

One particular known method that employs the first and second probes as described above, captures a set of packets respectively at the first and second probes, i.e. at the first and second points along the communications link. As each packet is captured, a timestamp is generated as well as a hash signature, derived from the packet data, which uniquely identifies the packet, the hash signature and associated timestamp being stored on the probe. After a predetermined number of packets have been captured, the hash signature and timestamp pairs are sent to a separate processor, known as a correlator, for correlation. At the correlator, the hash signatures are used to identify and match the two observations of a given packet, which passed the two separate points in the communications network. The timestamps of the matched instances of the given packet are then used to calculate jitter and average delay of the set of packets constituting a measured network flow. However, this system may generate sufficient additional traffic that could drive a heavily loaded network into instability.

Another method of performing loss measurements does not involve forwarding of the hash signature/timestamp pair to a separate correlator. Instead, by filtering at the two probes for a predetermined specific set of matching packet instances corresponding to predetermined flows, only the set of timestamps need be sent for comparison at the correlator. However, this method requires careful selection of a filter algorithm to ensure spurious packets are not selected. If the filter is too wide then not only are too many packets selected, incorrect packets that are part of alternate flows, not part of the measured flow on the monitored link, may also be incorrectly selected for correlation, resulting in spurious timestamps being sent to the correlator and overall results being compromised. Without any mechanism to correlate timestamps with actual packet instances, the above mentioned spurious results cannot be eliminated and a final statistical grooming to remove the spurious results is therefore required. However, even use of complex statistical techniques does not completely eliminate the possibility of pollution of results data by false matches. Additionally, on links with high levels of jitter, the statistical grooming mentioned above may eliminate measurements that are, in fact, correct, thus causing further false results. Additionally, an absence of the hash signature to match timestamps results in the correlator being unable to identify out of order packets.

According to a first aspect of the present invention, there is provided a method of sampling datagrams, the method comprising the steps of: sampling a plurality of datagrams from a predetermined flow of datagrams associated with a first point in a communications link, the plurality of datagrams being sampled with reference to a first respective plurality of sampling intervals; generating respective first time record data corresponding to a predetermined number of the plurality of datagrams; sampling the plurality of datagrams from the predetermined flow of datagrams associated with a second point in the communications link, the plurality of datagrams being sampled with reference to a second respective plurality of sampling intervals; generating respective second time record data corresponding to of the predetermined number of the plurality of datagrams; and correlating the first and second time record data; wherein the first respective plurality of sampling intervals is consistent with the second respective plurality of sampling intervals.

The method may further comprising the steps of: obtaining a copy of datagrams passing the first point and extracting datagrams relating to the predetermined flow of datagrams therefrom; and obtaining a copy of the datagrams passing the second point and extracting datagrams relating to the predetermined flow of datagrams therefrom.

The sampling may be passive. The first and second respective plurality of sampling intervals may be intervals of datagram sequence numbers.

The first time record data comprises a first time record entry and the second time record data may comprise a second time record entry, the first time record entry respectively corresponding to the second time record entry, the first and second time record entries relating to a same sampled datagram from the predetermined flow of datagrams.

The first time record entry may correspond to a first sampling interval of the first respective plurality of sampling intervals, the same sampled datagram having a sequence number numerically closest to a lower limit of the first sampling interval.

The second time record entry may correspond to a second sampling interval of the second respective plurality of sampling intervals, the same sampled datagram having a sequence number numerically closest to a lower limit of the second sampling interval.

The step of correlating the first and second time record data may comprise the steps of: receiving the first time record data in respect of the first point, the first time record data comprising a first plurality of time record entries associated with the sampled plurality of datagrams; and receiving the second time record data in respect of the second point, the second time record data comprising a second plurality of time record entries associated with the sampled plurality of datagrams.

The first time record data and the second time record data may each comprise flow-identifying data to identify the predetermined flow of datagrams.

The step of sampling the plurality of datagrams from the predetermined flow of datagrams associated with the first point in the communications link may comprise the steps of: providing a plurality of individually testable threshold values, the plurality of threshold values delineating the first respective plurality of sampling intervals; and comparing a first sequence number of a datagram from the predetermined flow of datagrams with each of a first number of the plurality of threshold values so as to identify a first threshold value from the first plurality of threshold values equal to or less than the first sequence number of the datagram and numerically closest to the first sequence number.

The step of generating the respective first time record data may comprise the step of: recording a first time record in respect of the datagram from the predetermined flow of datagrams in response to the first threshold value identified; wherein the first time record may be recorded in the first time record data, a position of the first time record within the first time record data relative to other time record entries corresponding uniquely to the first threshold value identified from the first number of the plurality of threshold values.

The step of sampling the plurality of datagrams from the predetermined flow of datagrams associated with the second point in the communications link may comprise the steps of: providing a plurality of individually testable threshold values, the plurality of threshold values delineating the second respective plurality of sampling intervals; and comparing a second sequence number of a datagram from the predetermined flow of datagrams with each of a second number of the plurality of threshold values so as to identify a second threshold value from the second plurality of threshold values equal to or less than the second sequence number of the received datagram and numerically closest to the second sequence number.

The step of generating the respective second time record data may comprise the step of: recording a second time record in respect of the datagram from the predetermined flow of datagrams in response to the second threshold value identified; wherein the second time record is recorded in the second time record data, a position of the second time record within the second time record data relative to other time record entries corresponding uniquely to the second threshold value identified from the second number of the plurality of threshold values.

Each time record entry of the first time record data may respectively correspond to each of the first respective plurality of sampling intervals. Each time data entry of the second time record data may respectively correspond to each of the second respective plurality of sampling intervals.

The first threshold value may be unavailable for subsequent comparisons in response to the first threshold value being equal to or less than the first sequence number of the datagram from the predetermined flow of datagrams and numerically closest to the first sequence number. The second threshold value may be unavailable for subsequent comparisons in response to the second threshold value being equal to or less than the second sequence number of the datagram from the predetermined flow of datagrams and numerically closest to the second sequence number.

The first and second threshold values may be available for comparison in response to the first and second sequence number being out-of-sequence.

The predetermined flow of datagrams may comprise an out-of-sequence datagram, the method further comprising the step of: identifying the out-of-sequence datagram as being out of sequence; and identifying one of the first number of the plurality of threshold values less than or equal to a sequence number of the out-of-sequence datagram and numerically closest to the sequence number of the out-of-sequence datagram.

The method may further comprise the step of: substituting a time record entry for a datagram sampled in the absence of the out-of-sequence datagram with a time record associated with the out-of-sequence datagram.

The predetermined flow of datagrams may comprise an out-of-sequence datagram, the method further comprising the step of: identifying the out-of-sequence datagram as being out of sequence; and identifying one of the second number of the plurality of threshold values less than or equal to a sequence number of the out-of-sequence datagram and numerically closest to the sequence number of the out-of-sequence datagram.

The method may further comprise the step of: substituting a time record entry for a datagram sampled in the absence of the out-of-sequence datagram with a time record associated with the out-of-sequence datagram.

The method may further comprise the step of: temporarily storing sequence numbers of datagrams corresponding to time records stored in the first time record data and/or second time record data; and using the temporarily stored sequence numbers to identify in the first time record data and/or the second time record data the time record entry for the datagram sampled in the absence of the out-of-sequence datagram.

The step of using the temporarily stored sequence numbers may comprise the steps of: comparing from the temporarily stored sequence numbers a temporarily stored sequence number associated with the time record entry recorded in the absence of the out-of-sequence datagram with the sequence number of the out-of-sequence datagram; and determining whether the sequence number of the out-of-sequence datagram is less than the temporarily stored sequence number.

The method may further comprise the step of: sending the first time record data and/or the second time record data to a correlator without the temporarily stored sequence numbers.

The first plurality of threshold values may comprise a predetermined separation therebetween; and the second plurality of threshold values may comprise substantially the predetermined separation therebetween.

The first plurality of thresholds and/or the second plurality of thresholds may comprise an initial threshold, the method may further comprise the step of: setting the initial threshold with respect to a Transmission Control Protocol (TCP) synchronise (SYN) value.

The method may further comprise the step of: obtaining the TCP SYN value from a TCP SYN datagram.

The first and second pluralities of time record entries may be arrival times associated with the sampled plurality of datagrams at the first and second points, respectively.

According to a second aspect of the present invention, there is provided a computer program element comprising computer program code means to make a computer execute the method as set forth above in relation to the first aspect of the invention.

The computer program element may be embodied on a computer readable medium.

According to a third aspect of the present invention, there is provided a method of calculating datagram jitter comprising the method as set forth above in relation to the first aspect of the invention.

According to a fourth aspect of the present invention, there is provided a method of calculating datagram delay comprising the method of sampling datagrams as set forth above in relation to the first aspect of the invention.

According to a fifth aspect of the present invention, there is provided a datagram sampling apparatus comprising: a sampler for sampling a plurality of datagrams from a predetermined flow of datagrams associated with a point in a communications link, the plurality of datagrams being sampled with reference to a respective plurality of sampling intervals; and a time record generator for generating respective time record data corresponding to a predetermined number of the plurality of datagrams; wherein the respective plurality of sampling intervals is in accordance with a shared predetermined sampling interval regime so that the time record data comprises a plurality of time record entries corresponding respectively to the respective plurality of sampling intervals.

The time record data may be contained in a data structure.

According to a sixth aspect of the present invention, there is provided a time record correlator apparatus for a communications network, the apparatus comprising: a processing resource arranged to receive first time record data and second time record data, and correlate the first and second time record data; wherein the first time record data comprises a first plurality of time record entries and the second time record data comprises a second plurality of time record entries, a position of a data record entry in the first time record data having a corresponding known counterpart position in the second time record data.

According to a seventh aspect of the present invention, there is provided a datagram sampling system comprising: a first sampler for sampling a plurality of datagrams from a predetermined flow of datagrams associated with a first point in a communications link, the plurality of datagrams being sampled with reference to a first respective plurality of sampling intervals; a first time record generator for generating respective first time record data corresponding to a predetermined number of the plurality of datagrams; a second sampler for sampling the plurality of datagrams from the predetermined flow of datagrams associated with a second point in the communications link, the plurality of datagrams being sampled with reference to a second respective plurality of sampling intervals; a second time record generator for generating respective second time record data corresponding to of the predetermined number of the plurality of datagrams; and a correlator the first and second time record data; wherein the first respective plurality of sampling intervals is consistent with the second respective plurality of sampling intervals.

It is thus possible to provide a method, system and apparatus that does not require identifying patterns to be sent with timestamps of sampled packets, thereby reducing the amount of data that needs to be communicated to a correlator.

At least one embodiment of the invention will now be described, by way of example only, with reference to the accompanying drawings, in which:

**Figure 1** is a schematic diagram of interconnected network elements constituting a part of a communications network and monitoring apparatus coupled thereto;
**Figure 2** is a schematic diagram of the monitoring apparatus of Figure 1 constituting an embodiment of this invention;
**Figure 3** is a schematic diagram of a part of the monitoring apparatus of Figure 2;

**Figure 4** is a schematic diagram of a datagram structure used to form messages for the communications network in accordance with the IEEE802.3 standard;

**Figure 5** is a schematic diagram of a structure of an Internet Protocol (IP) Header of the datagram structure of Figure 4;

**Figure 6** is a schematic diagram of a structure of a Transmission Control Protocol (TCP) Header of the datagram structure of Figure 4;

**Figures 7A and 7B** are flow diagrams of a method of sampling datagrams using, inter alia, the apparatus of Figure 2;

**Figures 8A and 8B** are flow diagrams of a step of Figure 7B in greater detail; and

**Figure 9** is a schematic diagram of a data structure for use with the apparatus and/or method of Figures 1 to 8B.

Throughout the following description identical reference numerals will be used to identify like parts.

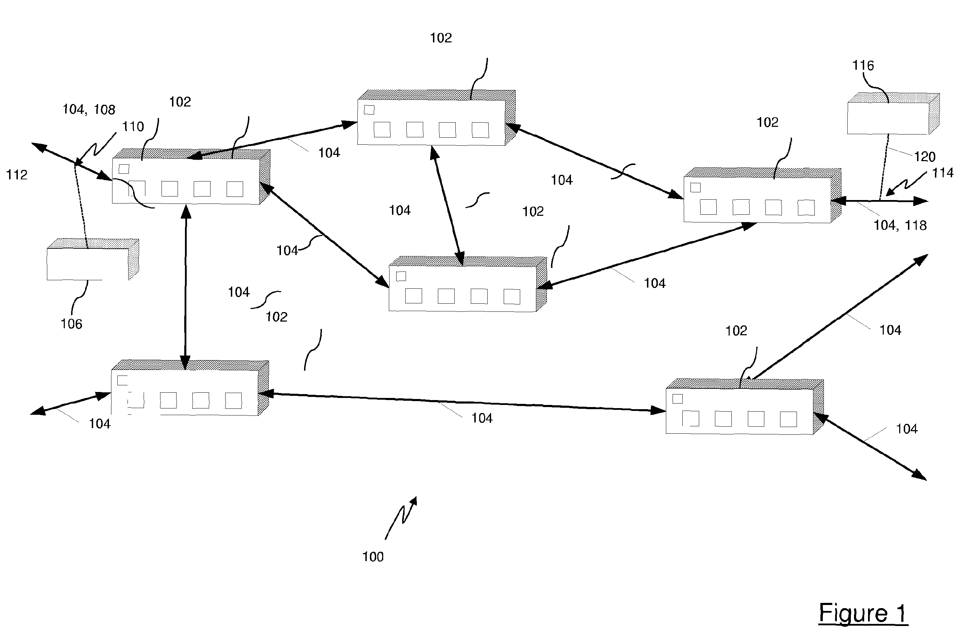

Referring to Figure 1, a communications network 100, for example a part of an intranet, comprises a plurality of interconnected network elements 102. In this example, the network elements 102 are routers, the network elements 102 being interconnected by respective communications links 104. A first network probe 106 is coupled to a first link 108 at a first point 110 in the communications network 100 by a first network tap 112. At a second point 114 in the communications network 100, a second network probe 116 is coupled to a second link 118 by a second network tap 120. Although not shown in any detail in Figure 1, the first and second taps 112, 120 are readily available for most common transport systems; the first and second taps 112, 120 are therefore appropriately arranged for the networking technology employed within a communications link (described later herein) being monitored and serve to facilitate passive monitoring of the communications link.

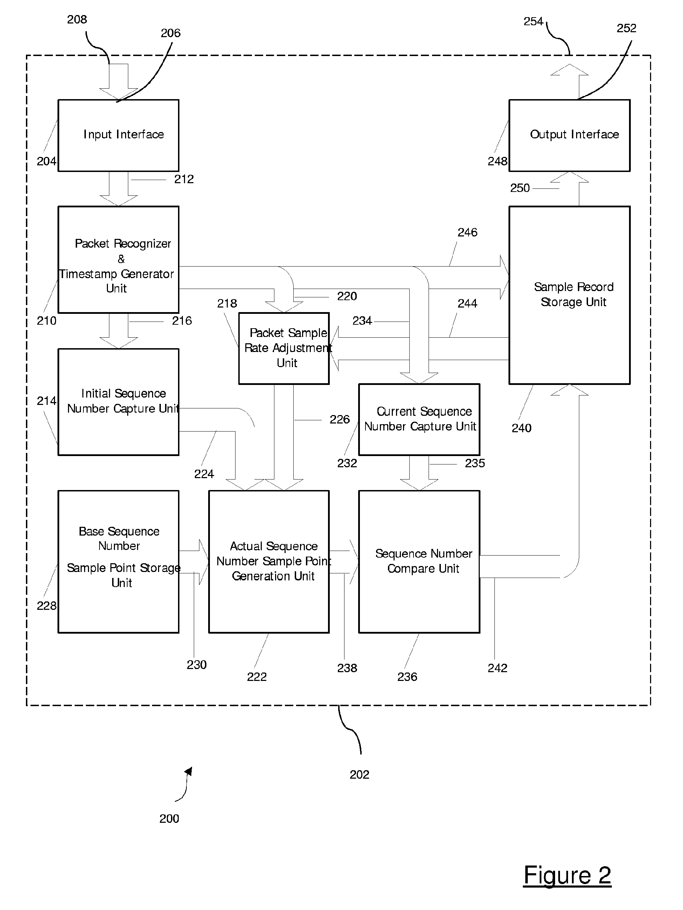

Turning to Figure 2, each of the first and second network probes 106, 116 comprises a processing resource 200, for example an Application Specific Integrated Circuit (ASIC). The processing resource 200 provides a packet sampling unit 202 comprising an input interface 204 having a first input 206 coupled to an input data bus 208. Although not shown in Figure 2, the input data bus 208 is coupled to other electrical circuitry for receiving a stream of bits as an electrical or optical signal via the first or second network taps 112, 120 and conditioning the received electrical or optical signal prior for receipt by the input interface 204. The input interface 204 is coupled to a packet recogniser and timestamp generator unit 210 via a first interconnecting data bus 212. The packet recogniser and timestamp generator unit 210 is coupled to an initial sequence number capture unit 214 via a second interconnecting data bus 216 and to a packet sample rate adjustment unit 218 via a third interconnecting data bus 220. Both the initial sequence number capture unit 214 and the packet sample rate adjustment unit 218 are respectively coupled to an actual sequence number sample point generator 222 via a fourth interconnecting data bus 224 and a fifth interconnecting data bus 226. A base sequence number sample point storage unit 228 is also coupled to the actual sequence number sample point generation unit 222 via a sixth interconnecting data bus 230.

The packet recogniser and timestamp generator unit 210 is also coupled to a current sequence number capture unit 232 via a seventh interconnecting data bus 234, the current sequence number capture unit 232 being coupled to a sequence number compare unit 236 via an eighth interconnecting data bus 235. The sequence number compare unit 236 is also coupled to the actual sequence number sample point generation unit 222 via a ninth interconnecting data bus 238 and to a sample record storage unit 240 via a tenth interconnecting data bus 242.

The sample record storage unit 240 is also coupled to the packet sample rate adjustment unit 218 via an eleventh interconnecting data bus 244, to the packet recogniser and timestamp generator unit 210 via a twelfth interconnecting data bus 246 as well as to an output interface 248 via a thirteenth interconnecting data bus 250. The output interface 248 has an output 252 coupled to an output data bus 254. Although not shown in Figure 2, the output data bus 254 is coupled to other electrical circuitry that is arranged to transmit the "results" to a management or measurement device (not shown in Figure 1, but described later herein).

Although the above units have been described in terms of hardware, the skilled person will, of course, appreciate that the functionality can be implemented in software or a combination of both hardware and software.

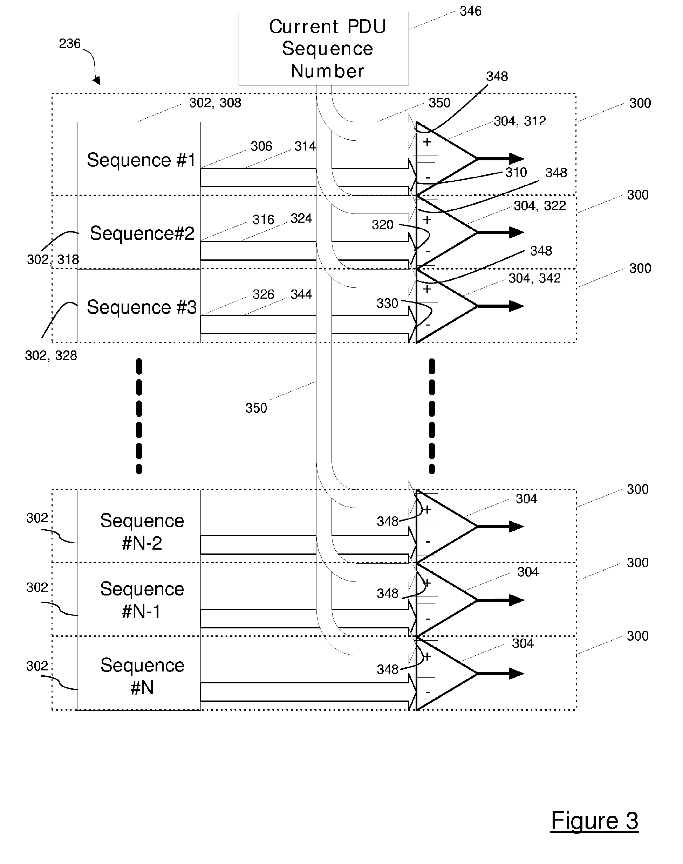

Turning to Figure 3, the sequence number compare unit 236 comprises a chain of N comparator modules 300. Each comparator module 300 comprises a sequence number register 302, the sequence number register 302 being coupled to an inverting input of a corresponding comparator 304. Consequently, a first output 306 of a first sequence number register 308 is coupled to a first inverting input 310 of a first comparator 312 via a first comparator data bus 314.

Similarly, a second output 316 of a second sequence number register 318 is coupled to a second inverting input 320 of a second comparator 322 via a second comparator data bus 324. A third output 326 of a third sequence number register 328 is coupled to a third inverting input 330 of a third comparator 342 via a third comparator data bus 344. The remaining sequence number registers 302 and comparators 304 of the N comparator modules 300 are similarly configured and so to avoid over-complicating the description of the sequence number compare unit 236, the remaining comparator modules will not be described further herein.

A current Packet Data Unit (PDU) or datagram sequence number register 346 is coupled to each non-inverting input 348 of the comparators 304 via a common comparator data bus 350.

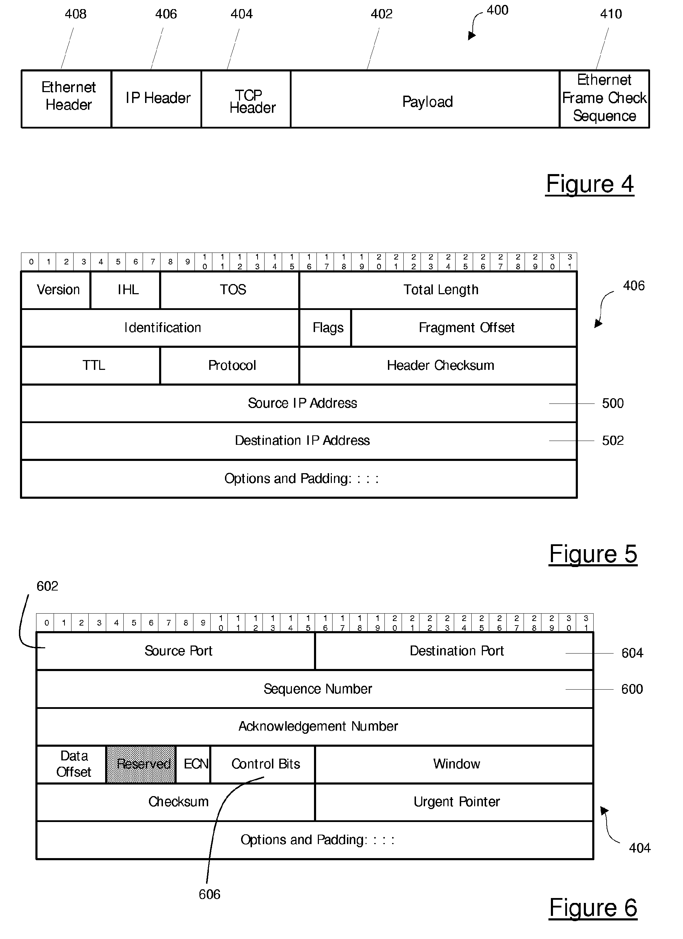

In operation, packets originating from a source Internet Protocol (IP) address (not shown) pass, in this example, past the first point 110 and the second point 114 on the way to a destination IP address (not shown), the route being taken being considered a communications link. Referring to Figure 4, a typical packet 400 comprises a payload 402 encapsulated by a Transmission Control Protocol (TCP) packet identified as such by a TCP Header 404. The TCP packet is encapsulated in an IP packet identified as such by an IP Header 406. In the present example, the IP packet is encapsulated in an Ethernet frame, for example in accordance with the IEEE 802.3 standard, identified as such by an Ethernet Header 408 and an Ethernet frame check sequence 410.

In relation to the IP Header 406 (Figure 5), the IP Header 406 comprises a plurality of fields. However, only a Source IP Address field 500 and a Destination IP Address field 502 are of particular relevance to this example and so the other fields will not be described herein, though it should be noted that the skilled person is familiar with the plurality of fields of the IP Header 406. In relation to the TCP Header 404 (Figure 6), the TCP Header 404 also comprises a plurality of fields. However, only a Sequence Number field 600, a Source Port field 602, a Destination Port field 604 and a control bits field 606 are of particular relevance to this example and so the other fields will not be described herein, though it should be noted that the skilled person is familiar with the plurality of fields of the TCP Header 404.

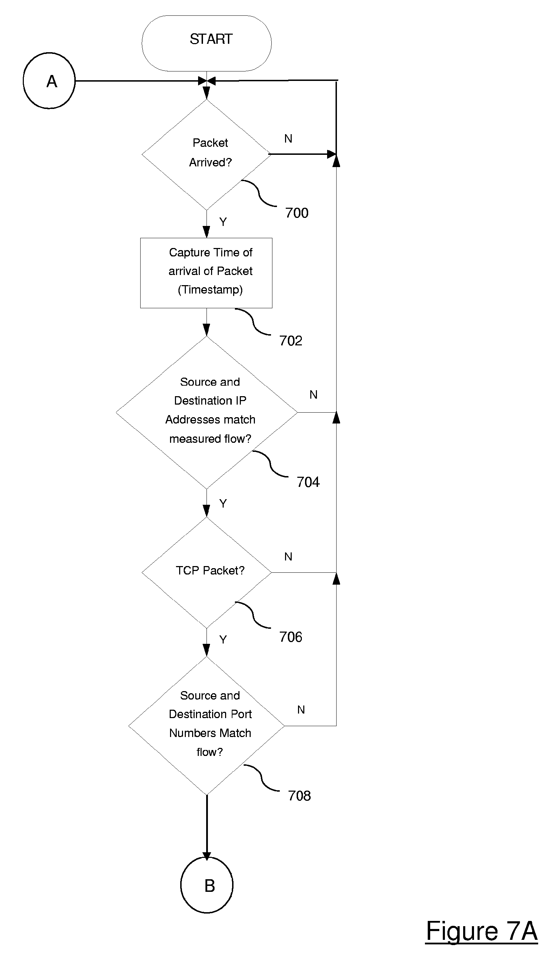

Referring to Figure 7A, the packet recogniser and timestamp generator unit 210 awaits (Step 700) arrival of a packet. Upon receipt, and hence arrival, of a packet, the received packet recogniser and timestamp generator unit 210 captures (Step 702) a time of arrival of the packet and generates a timestamp associated with the received packet. The packet recogniser and timestamp generator unit 210 is pre-programmed with, or has access to, a list of flows to be monitored. The list of flows comprises at least one identity of at least one predetermined flow of packets. The at least one predetermined flow is identified by a source IP address (not shown) and a destination IP address (not shown) in combination with the source port number (not shown) and the destination port number (not shown). As implied by the above descriptions of the IP Header 406 and the TCP Header 404, the source and destination IP addresses are obtained from the Source IP Address field 500 and the Destination IP Address field 502, respectively, of the IP Header 406, and the source and destination port numbers are obtained from the Source Port field 602 and the Destination Port field 604, respectively, of the TCP Header 404. Consequently, in order to determine whether the received packet is part of a predetermined flow listed amongst the at least one predetermined flow, the packet recogniser and timestamp generator unit 210 analyses the IP Header 406 of the received packet to identify (Step 704) whether the source and destination IP addresses relate to the predetermined flow. If the source address or destination IP address of the received packet does not relate to the predetermined flow, then the packet recogniser and timestamp generator unit 210 discards the packet and associated timestamp and returns to awaiting (Step 700) receipt of packets. Otherwise, the packet recogniser and timestamp generator unit 210 then determines (Step 706) whether the IP Header 406 of the received packet encapsulates a TCP packet. If the IP Header 406 of the received packet does not encapsulate the TCP packet, then the packet recogniser and timestamp generator unit 210 again discards the packet and associated timestamp and returns to awaiting (Step 700) receipt of packets. Otherwise, the source port number and the destination port number found in the Source Port field 602 and the Destination Port field 604, respectively, are analysed to determine (Step 708) whether the source and destination port numbers of the received packet relate to the predetermined flow. If the source and destination port numbers do not relate to the predetermined flow of packets, the packet recogniser and timestamp generator unit 210 discards the received packet and associated timestamp and returns to awaiting (Step 700) receipt of packets.

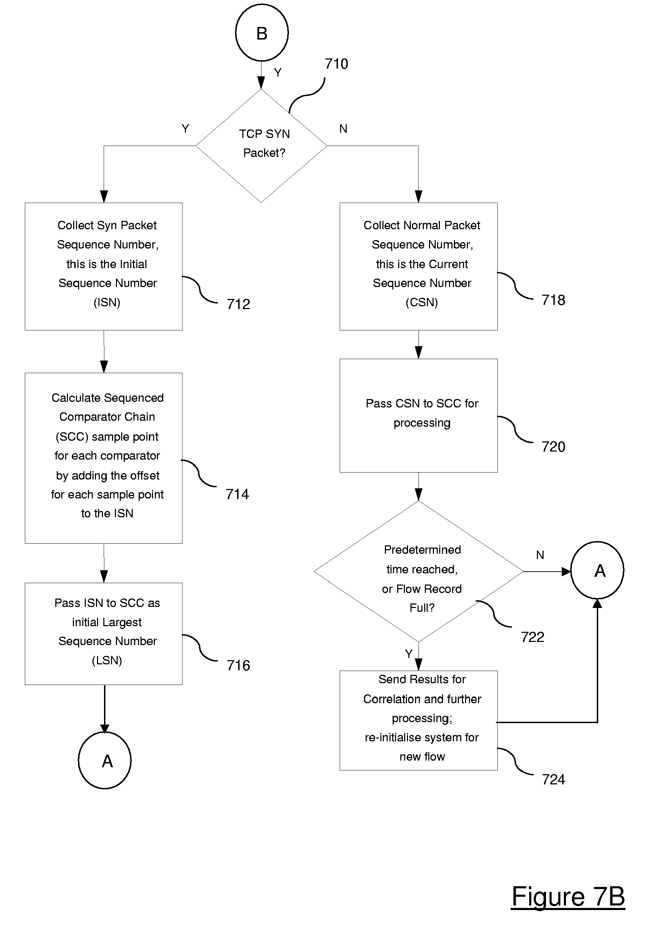

Thereafter (Figure 7B), the packet recogniser and timestamp generator unit 210 determines (Step 710) whether the packet received is a TCP Synchronisation (SYN) packet by reference to the control bits field 606.

If the received packet is a TCP SYN packet, the TCP SYN packet is passed to the initial sequence number capture unit 214 and the initial sequence number capture unit 214 extracts (Step 712) a sequence number of the SYN packet that serves as an Initial Sequence Number (ISN) value and stores the ISN value. The ISN value is then passed (Step 714) by the initial sequence number capture unit 214 to the actual sequence number sample point generation unit 222, where the actual sequence number sample point generation unit 222 calculates Sequenced Comparator Chain (SCC) sample points. The SCC sample points are sequence number threshold values calculated using the ISN value and adding increasing offset values to generate each SCC sample point. The offset values are adjustable by the packet sample adjustment unit 218 in the event that the sample record storage unit 240 is filling-up too rapidly, determined by comparison to the number of matching packets identified by the packet recogniser and timestamp generator unit 210. The sample point generation unit 222 obtains the offset values from the base sequence number sample point storage unit 228, the base offset values stored by the base sequence number sample point storage unit 228 being, for example, predefined and having a random distribution and being in respect of a flow having an initial sequence number of 0. The offset values are passed from the base sequence number sample point storage unit 228 to the actual sequence number sample point generation unit 222, where each successive SCC sample point is then generated by adding an increasing offset value to the ISN value:

$$SCC\_sample\_point\_number(n) = ISN\_value + offset\_value(n)$$

Where n = 1, 2, 3, ...

For example, a first SCC sample point is the ISN value, a second SCC sample point is the sum of the ISN value and a second offset value, a third SCC sample point is the sum of the ISN value and a third offset value, a fourth SCC sample point is the sum of the ISN value and fourth offset value, and so on. However, it should be appreciated that the precise manner in which the offset values are calculated can vary.

The first, second, third, ..., nth sample points are then passed to the sequence number compare unit 236 where they are stored in the first, second, third, ..., nth sequence number registers 302, respectively. The ISN value is also passed (Step 716) to the sequence number compare unit 236 and stored as an initial Largest Sequence Number (LSN) value. Thereafter, the packet recogniser and timestamp generator unit 210 continues awaiting (Step 700) another packet. It will, of course, be appreciated by the skilled person that this process takes place in parallel to the processing described above in relation to the SYN packet.

If the received packet is determined (Step 710) not to be a TCP SYN packet, the packet recogniser and timestamp generator unit 210 passes the received packet to the current sequence number capture unit 232, whereupon the current sequence number capture unit 232 extracts (Step 718) a sequence number of the received packet and passes (Step 720) the extracted sequence number to the sequence number compare unit 236, the sequence number compare unit 236 storing the extracted sequence number in the datagram sequence number register 346 as a Current Sequence Number (CSN) value.

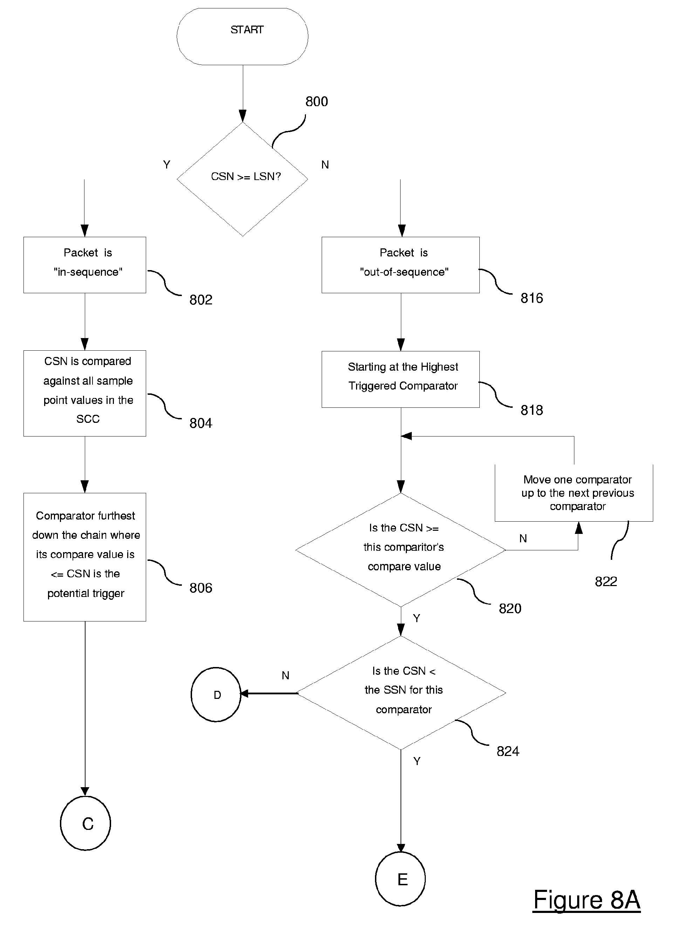

Referring to Figure 8A, upon receipt of the CSN value, the sequence number compare unit 236 determines (Step 800) whether the CSN value is greater than or equal to the LSN value in order to determine if the received packet is out-of-sequence. If the CSN value is greater than or equal to the LSN value, the received packet with which the CSN value is associated is deemed to be in-sequence (Step 802). Thereafter, the CSN value stored in the datagram sequence number register 346 is compared (Step 804) with each SCC sample point stored in the sequence number registers 302 by each of the N comparator modules 300. As will be appreciated, the comparison operation performed by the N comparator modules 300 results in a number of the N comparator modules 300 generating a logic HIGH output signal constituting "triggering" or activation of each of the number of comparator modules 300.

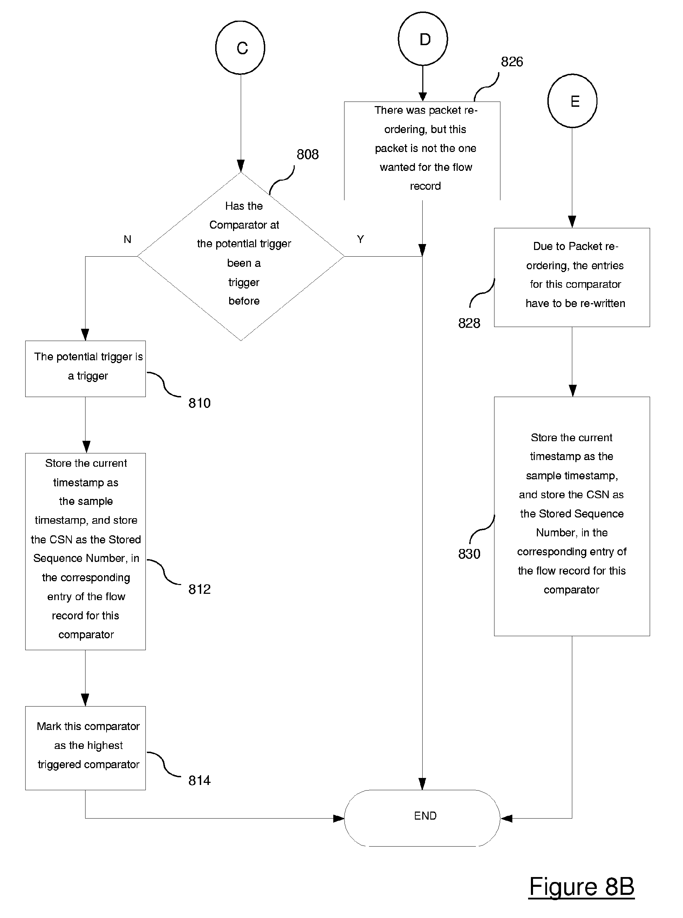

In order to identify the threshold value that is numerically closest to the CSN value, the sequence number compare unit 236 simply selects (Step 806) a numerically highest of the number of the N comparator modules 300, i.e. the triggered comparator modules. Thereafter (Figure 8B), the sequence number compare unit 236 determines (Step 808) if the comparator module 300 having the numerically highest sequence number stored in its sequence number register 302 has been previously selected. To determined previous selection, a flag is assigned to each of the N comparator modules 300 and the flag for the selected comparator module 300 is analysed to determine whether the flag has previously been set.

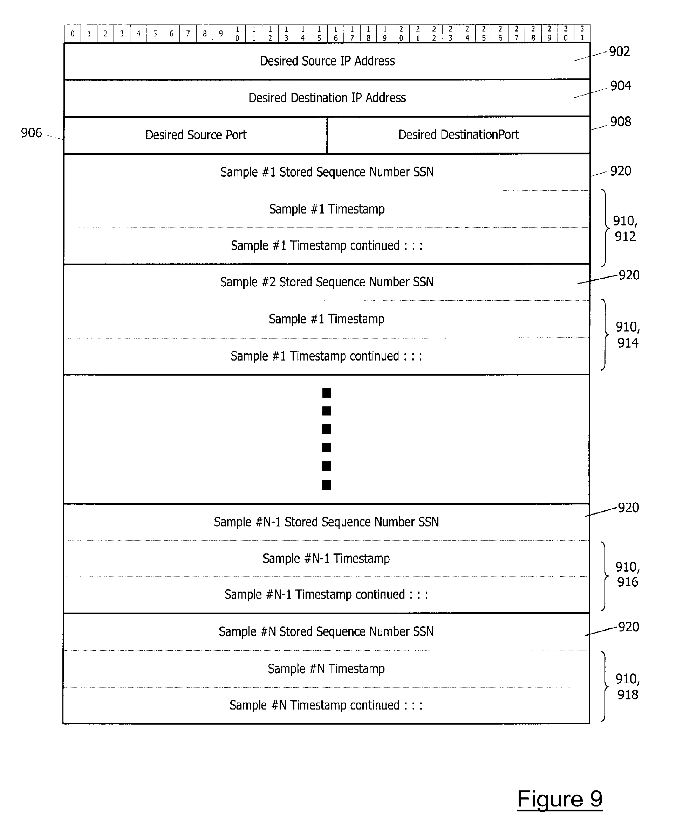

If, through analysis of the flag associated with the selected comparator module 300, the selected comparator module 300 is deemed to have been previously selected, the received packet and the associated timestamp are discarded and the packet sampling unit 202 returns to awaiting (Step 700) receipt of copies of packets. However, if the selected comparator module 300 has been determined not to have been previously selected, the flag associated with the selected comparator module is set to indicate that the comparator module 300 has been selected (Step 810). The timestamp generated by the packet recogniser and timestamp generator 210 for the received packet is then stored (Step 812) in a data structure 900 (Figure 9) constituting a record of the predetermined flow. Referring to Figure 9, the data structure 900 is stored in the sample record storage unit 240 and comprises a Desired Source IP Address field 902, a Desired Destination IP Address field 904, a Desired Source Port field 906 and a Desired Destination Port field 908. The Desired Source IP Address field 902, the Desired Destination IP Address field 904, the Desired Source Port field 906 and the Desired Destination Port field 908 together identify the predetermined flow being monitored. The data structure 900 also comprises N time record entries 910, comprising a first time record entry 912, a second time record entry 914, ..., an N-1$^{th}$ time record entry 916 and an N$^{th}$ time record entry 918. Each of the time record entries 910 corresponds respectively to each comparator module 300 on a one-to-one basis. Consequently, if the first comparator module is triggered, the timestamp for the received packet is stored as the first time record entry 912. If the third comparator module is triggered, the timestamp for the received packet is stored as the third time record entry (not shown). Generalising, if the N$^{th}$ comparator module is triggered, the timestamp for the packet is stored as the N$^{th}$ time record entry 918.

In addition to the timestamp for the received packet, the CSN being tested is temporarily stored (Step 812) in a Stored Sequence Number (SSN) field of the time record entry 910 associated with the comparator module selected. The sequence number compare unit 236 then stores a Highest Triggered Comparator (HTC) identifier to record (Step 814) the selected comparator module 300 as being a highest selected and triggered comparator module so far. Thereafter (Figure 7B), the packet sampling unit 202 determines (Step 722) whether a timeout period has expired (not shown in Figure 2) or the data structure 900 is full. If the timeout period has not expired nor the data structure 900 is full, the packet sampling unit 202 returns to awaiting (Step 700) a next packet. Otherwise, the sampling record storage unit 240 sends the data structure 900 to a central processing resource, for example an Operations Support Systems (OSS) application for correlation. In this example, an OSS correlator application is provided to correlate data structures received from different network probes deployed throughout the communications network 100. The packet sampling unit 202 then re-initialises itself in readiness to monitor another predetermined flow of packets. In order to monitor a number of flows simultaneously, the packet recogniser and timestamp generator unit 210, the initial sequence number capture unit 214, the packet sample rate adjustment unit 218, the actual sequence number sample point generation unit 222, the current sequence number capture unit 232, and the sequence number compare unit 236 could either be instantiated a number of times, or alternatively, be designed to handle different flows of interest concurrently, bearing in mind that only one packet or frame could be received in one direction at a time . However, for the sake of simplicity and clarity of description the multiple instantiations are not shown or described further herein.

The above operation of the packet sampling unit 202 is repeated for subsequently received packets until, as mentioned above, the timeout period expires or the data structure 900 becomes full. Consequently, the data structure 900 is gradually populated with time record entries relating to the predetermined flow of packets. However, in order to fully illustrate operation of the packet sampling unit 202, it is now assumed that one of the packets received by the packet sampling unit 202 is an out-of-sequence packet that is not a SYN packet, but is from the predetermined flow of packets being monitored. Consequently, the processing in relation to the out-of-sequence packet reaches the stage where the sequence number comparator unit 236 identifies (Step 800) the out-of-sequence packet as being out-of-sequence, whereafter operation of the packet sampling unit 202 is different to that described above. Clearly, the sequence number comparator unit 236 determines that the CSN value of the out-of-sequence packet is greater than or equal to the LSN value and so the out-of-sequence packet is deemed (Step 816) out-of-sequence and so the sequence number comparator unit 236 begins a "reverse search" of the already selected comparator modules 300.

Consequently, the sequence number comparator unit 236 retrieves (Step 818) the HTC identifier and determines (Step 820) whether the CSN value of the out-of-sequence packet is greater than or equal to the sequence number stored in the sequence number register 302 of the comparator module 300 associated with the HTC identifer. If the CSN value of the out-of-sequence packet is not greater than or equal to the sequence number stored in the sequence number register 302 associated with the HTC identifier, the sequence number comparator unit 236, using the flags for each comparator module 300, identifies (Step 822) a next numerically highest comparator module 300 that has previously been triggered and selected, and repeats the above comparison of the CSN value with the sequence number stored in the sequence number register 302 of the next numerically highest comparator module 300 that has been triggered and selected. This sub-process of finding next highest triggered and selected comparator modules 300 is repeated until one is found where the CSN value of the out-of-sequence packet is greater than or equal to the sequence number stored in the sequence number register 302 of the triggered and selected comparator module 300 found.

The sequence number comparator unit 236 then accesses the time record entry 910 corresponding to the triggered and previously selected comparator module 300 found and determines (Step 824) whether the CSN value of the out-of-sequence packet is less than the SSN value stored in the SSN field 920 of the time record entry 910 accessed. If the CSN value of the out-of-sequence packet is not less than the SSN value stored in the SSN field 920 of the time record entry 910 accessed, the sequence number comparator unit 236 concludes (Step 826) that packet re-ordering has taken place, but that the out-of-sequence packet is not required to be sampled in order to monitor the predetermined flow of packets. Thereafter (Figure 7B), the sequence number compare unit 236 determines (Step 722) whether the timeout period has expired or the data structure 900 is full as described above.

Alternatively, if the CSN value of the out-of-sequence packet is found to be less than the SSN value stored in the SSN field 920 of the time record entry 910 accessed, the sequence number comparator unit 236 concludes (Step 828) that the time record entry 910 accessed has to be re-written and so the timestamp associated with the out-of-sequence packet is stored (Step 830) in place of the time record entry 920 accessed. Additionally, the CSN value of the out-of-sequence packet is stored in the SSN field 920 of the time record entry 910 amended. Thereafter (Figure 7B), the sequence number compare unit 236 determines (Step 722) whether the timeout period has expired or the data structure 900 is full as described above.

Prior to sending the data structure 900 to the correlator, the sequence number comparator unit 202 removes all SSN fields 920, and hence entries, from the data structure 900.

The above described operation is performed by both the first and second network probes 106, 116 and so for every data structure generated by the first network probe 106, a counterpart data structure is generated by the second network probe. Moreover, each time record entry of the data structure generated by the first network probe 106 has a counterpart time record entry in the counterpart data structure generated by the second network probe 116.

At the correlator (not shown), the data structure generated by the first network probe 106 and the data structure generated by the second network probe are received and, using the data in the Desired Source IP Address field 902, the Desired Destination IP Address field 904, the Desired Source Port field 906 and the Desired Destination Port field 908, are identified as relating to the predetermined flow of packets to be monitored. Further, due to the correspondence between the time record entry positions in each of the data structures generated by the first and second network probes 106, 116, the correlator is able to match timestamp data for sampled packets and use the matched timestamp data to perform jitter and/or delay calculations in relation to the predetermined flow of packet.

It should be understood that reference herein to the processing resource is intended to embrace either a single data processing entity or a plurality of data processing entities either co-located or distributed.

It should also be appreciated that although the above-described sampling functionality is implemented within a probe, it can alternatively be implemented within a network element or distributed between a probe and a network element, or between a number of network elements.

Although the above examples have been described in the context of packet communication, it should be appreciated that the term "message" is intended to be construed as encompassing packets, datagrams, frames, cells, and protocol data units and so these term should be understood to be interchangeable.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

**Claims**

1. A method of sampling datagrams, the method comprising the steps of:

    sampling a plurality of datagrams from a predetermined flow of datagrams associated with a first point in a communications link, the plurality of datagrams being sampled with reference to a first respective plurality of sampling intervals;
    generating respective first time record data corresponding to a predetermined number of the plurality of datagrams;
    sampling the plurality of datagrams from the predetermined flow of datagrams associated with a second point in the communications link, the plurality of datagrams being sampled with reference to a second respective plurality of sampling intervals;
    generating respective second time record data corresponding to of the predetermined number of the plurality of datagrams; and
    correlating the first and second time record data; wherein
    the first respective plurality of sampling intervals is consistent with the second respective plurality of sampling intervals.

2. A method as claimed in Claim 1, further comprising the steps of:

    obtaining a copy of datagrams passing the first point and extracting datagrams relating to the predetermined flow of datagrams therefrom; and
    obtaining a copy of the datagrams passing the second point and extracting datagrams relating to the predetermined flow of datagrams therefrom.

3. A method as claimed in Claim 1 or Claim 2, wherein the first time record data comprises a first time record entry and the second time record data comprises a second time record entry, the first time record entry respectively corresponding to the second time record entry, the first and second time record entries relating to a same sampled datagram from the predetermined flow of datagrams.

4. A method as claimed in any one of the preceding claims, wherein the step of correlating the first and second time record data comprises the steps of:

    receiving the first time record data in respect of the first point, the first time record data comprising a first plurality of time record entries associated with the sampled plurality of datagrams; and
    receiving the second time record data in respect of the second point, the second time record data comprising a second plurality of time record entries associated with the sampled plurality of datagrams.

5. A method as claimed in any one of the preceding claims, wherein the step of sampling the plurality of datagrams from the predetermined flow of datagrams associated with the first point in the communications link comprises the steps of:

> providing a plurality of individually testable threshold values, the plurality of threshold values delineating the first respective plurality of sampling intervals; and
> comparing a first sequence number of a datagram from the predetermined flow of datagrams with each of a first number of the plurality of threshold values so as to identify a first threshold value from the first plurality of threshold values equal to or less than the first sequence number of the datagram and numerically closest to the first sequence number.

6. A method as claimed in Claim 5, wherein the step of generating the respective first time record data comprises the step of:

> recording a first time record in respect of the datagram from the predetermined flow of datagrams in response to the first threshold value identified; wherein
> the first time record is recorded in the first time record data, a position of the first time record within the first time record data relative to other time record entries corresponding uniquely to the first threshold value identified from the first number of the plurality of threshold values.

7. A method as claimed in any one of Claims 1 to 6, wherein the step of sampling the plurality of datagrams from the predetermined flow of datagrams associated with the second point in the communications link comprises the steps of:

> providing a plurality of individually testable threshold values, the plurality of threshold values delineating the second respective plurality of sampling intervals; and
> comparing a second sequence number of a datagram from the predetermined flow of datagrams with each of a second number of the plurality of threshold values so as to identify a second threshold value from the second plurality of threshold values equal to or less than the second sequence number of the received datagram and numerically closest to the second sequence number.

8. A method as claimed in Claim 5, wherein the step of generating the respective second time record data comprises the step of:

> recording a second time record in respect of the datagram from the predetermined flow of datagrams in response to the second threshold value identified; wherein
> the second time record is recorded in the second time record data, a position of the second time record within the second time record data relative to other time record entries corresponding uniquely to the second threshold value identified from the second number of the plurality of threshold values.

9. A method as claimed in any one of the preceding claims, wherein the predetermined flow of datagrams comprises an out-of-sequence datagram, the method further comprising the step of:

> identifying the out-of-sequence datagram as being out of sequence; and
> identifying one of the first number of the plurality of threshold values less than or equal to a sequence number of the out-of-sequence datagram and numerically closest to the sequence number of the out-of-sequence datagram.

10. A method as claimed in Claim 9, further comprising the step of:

> substituting a time record entry for a datagram sampled in the absence of the out-of-sequence datagram with a time record associated with the out-of sequence datagram.

11. A method as claimed in any one of Claims 1 to 8, wherein the predetermined flow of datagrams comprises an out-of-sequence datagram, the method further comprising the step of:

> identifying the out-of-sequence datagram as being out of sequence; and
> identifying one of the second number of the plurality of threshold values less than or equal to a sequence number of the out-of-sequence datagram and numerically closest to the sequence number of the out-of-sequence datagram.

12. A method as claimed in Claim 11, further comprising the step of:

substituting a time record entry for a datagram sampled in the absence of the out-of-sequence datagram with a time record associated with the out-of-sequence datagram.

13. A method as claimed in any one of Claims 9 to 12, further comprising the step of:

temporarily storing sequence numbers of datagrams corresponding to time records stored in the first time record data and/or second time record data; and
using the temporarily stored sequence numbers to identify in the first time record data and/or the second time record data the time record entry for the datagram sampled in the absence of the out-of-sequence datagram.

14. A computer program element comprising computer program code means to make a computer execute the method as claimed in any one of the preceding claims.

15. A method of calculating datagram jitter comprising the method of sampling datagrams as claimed in any one of Claims 1 to 13.

16. A method of calculating datagram delay comprising the method of sampling datagrams as claimed in any one of Claims 1 to 13.

17. A datagram sampling apparatus comprising:

a sampler for sampling a plurality of datagrams from a predetermined flow of datagrams associated with a point in a communications link, the plurality of datagrams being sampled with reference to a respective plurality of sampling intervals; and
a time record generator for generating respective time record data corresponding to a predetermined number of the plurality of datagrams; wherein
the respective plurality of sampling intervals is in accordance with a shared predetermined sampling interval regime so that the time record data comprises a plurality of time record entries corresponding respectively to the respective plurality of sampling intervals.

18. A time record correlator apparatus for a communications network, the apparatus comprising:

a processing resource arranged to receive first time record data and second time record data, and correlate the first and second time record data; wherein
the first time record data comprises a first plurality of time record entries and the second time record data comprises a second plurality of time record entries, a position of a data record entry in the first time record data having a corresponding known counterpart position in the second time record data.

19. A datagram sampling system comprising:

a first sampler for sampling a plurality of datagrams from a predetermined flow of datagrams associated with a first point in a communications link, the plurality of datagrams being sampled with reference to a first respective plurality of sampling intervals;
a first time record generator for generating respective first time record data corresponding to a predetermined number of the plurality of datagrams;
a second sampler for sampling the plurality of datagrams from the predetermined flow of datagrams associated with a second point in the communications link, the plurality of datagrams being sampled with reference to a second respective plurality of sampling intervals;
a second time record generator for generating respective second time record data corresponding to of the predetermined number of the plurality of datagrams; and
a correlator the first and second time record data; wherein
the first respective plurality of sampling intervals is consistent with the second respective plurality of sampling intervals.

Figure 2

Figure 3

| 408 | 406 | 404 | 402 | 400 | 410 |

| Ethernet Header | IP Header | TCP Header | Payload | | Ethernet Frame Check Sequence |

Figure 4

| 0 | 1 | 2 | 3 | 4 | 5 | 6 | 7 | 8 | 9 | 1 0 | 1 1 | 1 2 | 1 3 | 1 4 | 1 5 | 1 6 | 1 7 | 1 8 | 1 9 | 2 0 | 2 1 | 2 2 | 2 3 | 2 4 | 2 5 | 2 6 | 2 7 | 2 8 | 2 9 | 3 0 | 3 1 |
|---|---|---|---|---|---|---|---|---|---|---|---|---|---|---|---|---|---|---|---|---|---|---|---|---|---|---|---|---|---|---|---|

406

| Version | IHL | TOS | Total Length |
| Identification | Flags | Fragment Offset |
| TTL | Protocol | Header Checksum |
| Source IP Address | 500 |
| Destination IP Address | 502 |
| Options and Padding: : : : |

Figure 5

602

| 0 | 1 | 2 | 3 | 4 | 5 | 6 | 7 | 8 | 9 | 1 0 | 1 1 | 1 2 | 1 3 | 1 4 | 1 5 | 1 6 | 1 7 | 1 8 | 1 9 | 2 0 | 2 1 | 2 2 | 2 3 | 2 4 | 2 5 | 2 6 | 2 7 | 2 8 | 2 9 | 3 0 | 3 1 |
|---|---|---|---|---|---|---|---|---|---|---|---|---|---|---|---|---|---|---|---|---|---|---|---|---|---|---|---|---|---|---|---|

| Source Port | Destination Port | 604 |
| Sequence Number | 600 |
| Acknowledgement Number |
| Data Offset | Reserved | ECN | Control Bits | Window |
| Checksum | Urgent Pointer |
| Options and Padding: : : : |

606

404

Figure 6

15

START

A

Packet
Arrived? ——N——→

700

↓Y

Capture Time of
arrival of Packet
(Timestamp)

702

Source and
Destination IP
Addresses match
measured flow? ——N——

704

↓Y

TCP Packet? ——N——

706

↓Y

Source and
Destination Port
Numbers Match
flow? ——N——

708

B

Figure 7A

**B**

710

**TCP SYN Packet?**

Y ← → N

**Collect Syn Packet Sequence Number, this is the Initial Sequence Number (ISN)**

712

**Collect Normal Packet Sequence Number, this is the Current Sequence Number (CSN)**

718

**Calculate Sequenced Comparator Chain (SCC) sample point for each comparator by adding the offset for each sample point to the ISN**

714

**Pass CSN to SCC for processing**

720

**Pass ISN to SCC as initial Largest Sequence Number (LSN)**

716

**Predetermined time reached, or Flow Record Full?**

722

N → **A**

**A**

**Send Results for Correlation and further processing; re-initialise system for new flow**

724

Y

## Figure 7B

START

800

Y — CSN >= LSN? — N

Packet is
"in-sequence"

802

CSN is compared
against all sample
point values in the
SCC

804

Comparator furthest
down the chain where
its compare value is
<= CSN is the
potential trigger

806

C

Packet is
"out-of-sequence"

816

Starting at the Highest
Triggered Comparator

818

Is the CSN >=
this comparitor's
compare value

820

N — Move one comparator
up to the next previous
comparator

822

Y

N — D

Is the CSN <
the SSN for this
comparator

824

Y

E

<u>Figure 8A</u>

EP 1 684 463 A1

C

D

826

There was packet re-
ordering, but this
packet is not the one
wanted for the flow
record

808

E

Has the
Comparator at
the potential trigger
been a
trigger
before

N                                    Y

Due to Packet re-
ordering, the entries
for this comparator
have to be re-written

828

The potential trigger is
a trigger

810

Store the current
timestamp as
the sample
timestamp, and store
the CSN as the Stored
Sequence Number, in
the corresponding
entry of the flow
record for this
comparator

812

Store the current
timestamp as the
sample timestamp,
and store the CSN as
the Stored Sequence
Number, in the
corresponding entry of
the flow record for this
comparator

830

Mark this comparator
as the highest
triggered comparator

814

END

Figure 8B

| 0 | 1 | 2 | 3 | 4 | 5 | 6 | 7 | 8 | 9 | 1 0 | 1 1 | 1 2 | 1 3 | 1 4 | 1 5 | 1 6 | 1 7 | 1 8 | 1 9 | 2 0 | 2 1 | 2 2 | 2 3 | 2 4 | 2 5 | 2 6 | 2 7 | 2 8 | 2 9 | 3 0 | 3 1 |
|---|---|---|---|---|---|---|---|---|---|---|---|---|---|---|---|---|---|---|---|---|---|---|---|---|---|---|---|---|---|---|---|

Desired Source IP Address — 902

Desired Destination IP Address — 904

— 908

906 — | Desired Source Port | Desired DestinationPort |

Sample #1 Stored Sequence Number SSN — 920

Sample #1 Timestamp

Sample #1 Timestamp continued : : :

910, 912

Sample #2 Stored Sequence Number SSN — 920

Sample #1 Timestamp

Sample #1 Timestamp continued : : :

910, 914

■
■
■
■
■
■

Sample #N-1 Stored Sequence Number SSN — 920

Sample #N-1 Timestamp

Sample #N-1 Timestamp continued : : :

910, 916

Sample #N Stored Sequence Number SSN — 920

Sample #N Timestamp

Sample #N Timestamp continued : : :

910, 918

## Figure 9

**European Patent Office**

**EUROPEAN SEARCH REPORT**

Application Number

EP 06 10 0445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 836 466 B1 (KANT KRISHNA ET AL) 28 December 2004 (2004-12-28) * column 7, line 20 - line 49 * | 1-3, 13-19 | H04L12/26 |
| Y | * column 10, line 11 - line 58 * * column 11, line 35 - column 12, line 13 * * column 13, line 31 - line 63 * * column 14, line 39 - line 50 * * figures 3,4,7,8,10,12,13 * | 4 | |
| Y | WO 99/25085 A (VISUAL NETWORKS, INC; DRYSDALE, R., SCOTT; ENNIS, JAMES, D., JR; HASSE) 20 May 1999 (1999-05-20) * figures 1-4 * * page 5, line 6 - page 7, line 31 * | 4 | |
| X,P | WO 2005/109754 A (SYNEMATICS, INC; LIM, KOON-SENG; KYONG, YUNTAI; ROGERS, EARL, A) 17 November 2005 (2005-11-17) * page 1, line 29 - page 4, line 15 * * page 20, line 8 - line 14 * * figures 9,13-16 * | 1,14-19 | |
| A | QUITTEK NEC EUROPE LTD T ZSEBY FRAUNHOFER FOKUS B CLAISE CISCO SYSTEMS S ZANDER SWINBURNE UNIVERSITY J: "Requirements for IP Flow Information Export (IPFIX)" IETF STANDARD, INTERNET ENGINEERING TASK FORCE, IETF, CH, October 2004 (2004-10), XP015009690 ISSN: 0000-0003 * the whole document * | 1,14-19 | TECHNICAL FIELDS SEARCHED (IPC) H04L |
| A | US 2002/095492 A1 (KAASHOEK MARINUS FRANS ET AL) 18 July 2002 (2002-07-18) * paragraphs [0049], [0063], [0075] * | 5-8 | |

The present search report has been drawn up for all claims

| Place of search | Date of completion of the search | Examiner |
|---|---|---|
| Munich | 7 March 2006 | Bertsch, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 06 10 0445

This annex lists the patent family members relating to the patent documents cited in  the above-mentioned European search report.
The members are as contained in the European Patent Office EDP file on
The European Patent Office is in no way  liable for these particulars which are merely  given for the purpose of information.

07-03-2006

| Patent document cited in search report | | Publication date | Patent family member(s) | | Publication date |
|---|---|---|---|---|---|
| US 6836466 | B1 | 28-12-2004 | NONE | | |
| WO 9925085 | A | 20-05-1999 | AU | 1520999 A | 31-05-1999 |
| | | | CA | 2307766 A1 | 20-05-1999 |
| | | | EP | 1033002 A1 | 06-09-2000 |
| WO 2005109754 | A | 17-11-2005 | NONE | | |
| US 2002095492 | A1 | 18-07-2002 | AU | 9256601 A | 22-03-2002 |
| | | | WO | 0221278 A1 | 14-03-2002 |

EPO FORM P0459

For more details about this annex : see Official Journal of the European Patent Office, No. 12/82